# EUROPEAN PATENT SPECIFICATION

(11) **EP 2 043 450 B1**
(45) Date of publication and mention of the grant of the patent: **27.06.2012**
(21) Application number: 07747537.4
(22) Date of filing: 28.06.2007
(51) Int. Cl.: A23C 11/02, A23L 1/19, A23L 2/39, A23G 1/56, A23L 1/40

(54) **OIL-BASED ADDITIVE FOR A BEVERAGE**
ZUSATZSTOFF AUF ÖLBASIS FÜR EIN GETRÄNK
ADDITIF À BASE D'HUILE POUR UNE BOISSON

(30) Priority: 28.06.2006 NL 1032076
(43) Date of publication of application: 08.04.2009
(73) Proprietor: Friesland Brands B.V., 3818 LE Amersfoort (NL)
(72) Inventor: RIEGMAN, Edwin, Aart, NL-8375 HE Oldemarkt (NL)
(74) Representative: Hatzmann, Martin
(86) International application number: PCT/NL2007/050315
(87) International publication number: WO 2008/002139

(56) References cited:
- EP-A1- 0 455 288
- WO-A-2005/006887
- US-A- 2 278 469
- US-A- 2 279 202
- US-A1- 2 278 466
- US-A1- 2005 276 900
- CALLIAUW G ET AL: "Production of cocoa butter substitutes via two-stage static fractionation of palm kernel oil" JOURNAL OF THE AMERICAN OIL CHEMISTS' SOCIETY, vol. 82, no. 11, November 2005 (2005-11), pages 783-789, XP001249173 ISSN: 0003-021X

## Description

The invention relates to an additive, and particularly to a powdery additive for beverages, soups and other liquid foods, such as a dairy-based or non-dairy-based coffee creamer, a cappuccino foamer or an instant cocoa beverage. The invention is particularly directed to the fat phase of such additives. The additive is typically hot-soluble. Such additives contain - depending on the purpose of use - as a rule about 5-60% fat phase (oil and/or fat); 1-30% proteins; 20-75% carbohydrates; 0-5% emulsifiers; 0-6% stabilizers; 0-1% anti-caking agents and maximally 5%, more preferably maximally 3.5% liquid. A suitable protein and carbohydrate source is, for instance, skimmed milk powder or whey powder. As suitable carbohydrates, further, mono, oligo, and polysaccharides, such as glucose syrup, glucose, lactose, sucrose, fructose, maltodextrin, starch and mixtures thereof are possible. Suitable proteins are, for instance, casein, caseinates and whey proteins.

Emulsifiers which can be used are, for instance, mono and diglycerides of fatty acids, lactic acid esters of mono and diglycerides of fatty acids, citric acid esters of mono and diglycerides of fatty acids, tartaric acid esters of mono and diglycerides of fatty acids, or mixtures of above-mentioned esters, sucrose esters of fatty acids, sodium stearoyl-2-lactylate and sorbitan esters of fatty acids, including mixtures thereof.

Suitable stabilizers are, for instance, sodium or potassium salts of citrates, orthophosphates, diphosphates, triphosphates and polyphosphates.

Suitable anti-caking agents are, for instance, silicon dioxide, tricalcium phosphate or sodium aluminum silicate. If desired, to such additives, colorings (e.g. β-carotene), sweeteners or aromas (e.g. cream aromas) may also be added.

Up to now, the fat phase of above-mentioned additives is mainly based on hydrogenated coco fat and/or hydrogenated palm kernel fat.

To a lesser extent, partially hydrogenated palm or soy fat is also used. This choice of partially hydrogenated palm or soy fat is in fact only motivated by cost price; quality-wise, the additive does not get any better.

With regard to quality, lauric fats, such as hydrogenated coco fat and hydrogenated palm kernel fat, are clearly better. The flavor of these fats is creamy; the mouthfeel is creamy and not greasy; and the shelf life of these fats is excellent (shelf lives of at least two years are no problem).

US 2,278,466 describes disintegrable blocks of concentrated soup and cereal breakfast, which also contain a fat component. This component may be chosen from many fats, particularly wholly or partly hydrogenated. In particular, hydrogenated fats are used, with a high melting point, such as hydrogenated palm kernel stearin.

Palm fat, such as hydrogenated palm fat or palm kernel stearin, is also used in artificial whipped cream as described in WO 2005/006887 and in EP 0 455 288. The use of various palm fats, such as hydrogenated palm kernel stearin, in substitute products for cocoa butter, is referred to by Calliauw et al. in JAOCS, Vol. 82, no. 11 (2005), pp. 783-789.

Recently, there has been a noticeable development, particularly in the United Kingdom, where products which contain no wholly or partly hydrogenated fat are preferred. This development primarily results from health considerations, such as the discussion about trans fatty acids and (too great) amounts of saturated fat in products, and also becomes evident in the desire to see "vegetable oil" rather than "hydrogenated vegetable fat" on the labeling of the additives. In response to this development, a (large) number of foods are reformulated.

It is an object of the present invention to provide additives for beverages such as coffee creamers and/or cappuccino foamers, where the hydrogenated or partly hydrogenated fat fraction is substituted by a vegetable oil, without the quality requirements to be imposed on those additives being lowered. The most important of these quality requirements are the following requirements: having a creamy flavor; a creamy, non-greasy mouthfeel; a sufficiently long shelf life, such as a shelf life of at least 12 months, preferably at least 18 months, and possibly even 23 months.

In other words, the invention contemplates meeting a need for beverages, such as coffee creamers and/or cappuccino foamers, on the basis of unhydrogenated oil.

To this end, various oils have been tested, where unhydrogenated coco oil and unhydrogenated palm kernel oil emerged as possibly suitable oils. These oils caused a number of problems for the desired use as an additive, with, particularly, the flavor stability being critical. After about 6-12 months, the flavor of the additive with these fats therein was judged to be insufficiently fresh / neutral and insufficiently creamy.

It has now been found that the above-mentioned object can be achieved by using unhydrogenated palm kernel stearin in or as the fat phase.

Therefore, in a first aspect, the invention relates to a powdery additive for a beverage, soup or other liquid food, which additive comprises a fat phase, characterized in that the fat phase comprises palm kernel stearin.

Palm kernel stearin is often obtained as high-melting phase which is created in fractioning palm kernel oil (dry fractioning, so without solvent). One of the most important fields of application of this known product is to serve as a basis for cocoa butter substitutes. To this end, the product is completely hydrogenated, whereby a steep melting curve is created.

Unhydrogenated palm kernel stearin for this additive typically has an iodine value in the range of 5-11 gI/100g.

Unhydrogenated palm kernel stearin for this additive typically comprises at least 6% unsaturated fatty acid, in particular 6-10% C18:1 and 0-3% C18:2.

The C 8:0 content is typically 1-4%.

The C10:0 content is typically 1-4%.

The C12:0 content is typically 50-60%.

The C14:0 content is typically 19-24%.

The C16:0 content is typically 7-11%.

The C18:0 content is typically 1-4%.

The content of trans fatty acids is typically maximally 1%.

Conventional SFC values are as follows:
SFC N10 = 88 - 96%
SFC N20 = 78 - 88%
SFC N25 = 62 - 72%
SFC N30 = 25 - 35%
SFC N35 = max 3%

Here, SFC refers to the Solid Fat Content, and N** refers to the temperature. SFC N10 = 92% therefore means that, at 10°C, 92% of the fat is initially present in solid form.

For this additive, unhydrogenated palm kernel stearin with the following characteristic values is, for instance, very suitable:

| | |
|---|---|
| C 8:0 = 2 % | Trans fatty acids = max 1 % |
| C10:0 = 2 % | SFC N10 = 92% |
| C12:0 = 54 % | SFC N20 = 82 % |
| C 14:0 = 22 % | SFC N25 =67% |
| C16:0 = 9% | SFC N30 = 29 % |
| C18:0 = 2 % | SFC N35 = 0 % |
| C18:1= 8% | Iodine value = 8 gI/100g |
| C18:2 = 1 % | |

Although, in addition to unhydrogenated palm kernel stearin, any other fat or oil may be present, as long as the advantages given in this specification are obtained, it is preferred that unhydrogenated palm kernel stearin is the only fat component of the additive according to the invention. Preferably, less than 25%, more preferably less than 10%, still more preferably less than 5% of other fat or other oil is present in addition to unhydrogenated palm kernel stearin (based on the weight of the unhydrogenated palm kernel stearin).

According to the invention, unhydrogenated palm kernel stearin is used as a substitute of the above-mentioned wholly or partly hydrogenated fats in additives for a beverage, soup or other liquid food, such as non-dairy creamers or standard coffee creamers; dairy creamers including cappuccino toppings; cappuccino foamers, and in particular dairy creamers with encapsulated gas; instant cocoa beverages, and instant soup.

The composition and production of such additives such as coffee creamers and cappuccino foamers is generally known; see also above. For instance, reference can be made to American patent US-A-5,284,674 and international patent application WO-A-2006/022540. Both documents are incorporated by reference in the present specification to describe compositions and methods usable for the present invention, provided the fat fractions described in both documents are substantially substituted by unhydrogenated palm kernel stearin.

The additive according to the invention is typically made by melting the fat phase (if necessary) and bringing it, with the other ingredients, into an aqueous (rough) emulsion form (at a temperature above the melting point of the fat fraction), which is optionally thermalized, pasteurized or sterilized, and is then homogenized and atomized in a conventional manner, for instance and preferably by spray-drying.

By using the unhydrogenated palm kernel stearin as an oil phase, it is possible to make above-mentioned products, while the following requirements can be met: a creamy flavor, a creamy, non-greasy mouthfeel; and a shelf life at room temperature (about 20°C) of at least 18 months and even 24 months. In addition, when unhydrogenated palm kernel stearin is the only oil in the additive, or is only combined with other vegetable unhydrogenated oils, the additive can be labeled as vegetable oil instead of hydrogenated vegetable fat.

In the foregoing description, an additive for a beverage (or other liquid food) is involved. For the sake of completeness, it is further noted that an additive can not only be used by literally adding the additive to the beverage or other liquid food, but this can also be done the other way around, by addition of the beverage or other liquid food to the additive.

The present application is now illustrated in more detail on the basis of the following examples. All percentages stated in the examples, claims and descriptions are weight percentages, based on the weight of the total composition, unless stated otherwise.

### Example 1 Hydrogenated coco fat-based cappuccino foamer (comparison)

An amount of water, such that an oil-in-water emulsion with 60% dry matter can be obtained, was added to the mixing tank. The temperature was increased to about 60°C. Skimmed milk powder was added to the mixing tank in such an amount that about 31% skimmed milk powder was present in the powdery end product. After dispersing and dissolving the skimmed milk powder, such an amount of hydrogenated coco fat was added that about 22% hydrogenated coco fat was present in the powdery end product. Then such an amount of glucose syrup was added that about 43% glucose syrup was present in the powdery end product. Finally, an amount of dipotassium phosphate was added, such that about 2% dipotassium phosphate was present in the powdery end product.

After all components had been dispersed and dissolved, the mixture was homogenized in two steps of 160 and 30 bar respectively. After homogenizing, the oil-in-water emulsion was pasteurized for about 1 minute at about 80°C. After pasteurization, a certain amount of gas was injected to create a foam layer in the end application.

After this, the emulsion including the encapsulated gas was pumped to the Filtermat spray tower and then spray-dried to obtain a powdery cappuccino foamer having a particle size smaller than about 2 mm and about 2% liquid. After this, a small amount of silicon oxide was added to obtain a good free fluidity.

### Example 2: Unhydrogenated palm kernel stearin-based cappuccino foamer

A cappuccino foamer was produced according to the method of Example 1, but with unhydrogenated palm kernel stearin instead of hydrogenated coco fat.

The flavor of both cappuccino foamers was judged by a trained taste panel in a 10%-ish solution in hot water (about 70°C). The flavors of the two solutions of cappuccino foamer were compared; here, both the fresh cappuccino foamers and the cappuccino foamers which had been stored for 6 months at 40°C were tested. (Translated into shelf life this means (2 * 2* 6 months) 24 months at 20°C. This is because it generally holds that the oxidation rate and therefore also the rate of ageing increases a factor two with every 10°C of temperature increase.)

The taste panel did not observe any negative or other significant flavor differences in the product of Example 2 compared to the product of Example 1.

### Example 3: Hydrogenated coco fat-based on-dairy coffee creamer (comparison)

An amount of water, such that an oil-in-water emulsion with 71% dry matter can be obtained, was added to the mixing tank. The temperature was increased to about 68°C. Glucose syrup was added to the mixing tank in such an amount that about 61% glucose syrup was present in the powdery end product. After dissolving the glucose syrup, such an amount of sodium caseinate was added that about 2.5% sodium caseinate was present in the powdery end product. Then such amounts of sodium hexametaphosphate, dipotassium phosphate, diacetyl tartaric acid ester and glycerol monostereate were added that about 0.4%, 2%, 0.2% and 2%, respectively, of these components was present in the powdery end product. After dispersing and dissolving these components, such an amount of hydrogenated coco fat was added that about 30% hydrogenated coco fat was present in the powdery end product.

After all components had been dispersed and dissolved, the mixture was homogenized in the mixture in two steps of 160 and 30 bar, respectively. After homogenizing, the oil-in-water emulsion was pasteurized for about 1 minute at about 92°C.

After this, the emulsion was pumped to the Filtermat spray tower and then spray-dried to obtain a powdery non-dairy coffee creamer having a particle size smaller than about 2 mm and about 2% liquid. After this, a small amount of silicon oxide was added to obtain a good free fluidity.

### Example 4: Unhydrogenated palm kernel stearin-based non-dairy coffee creamer

A non-dairy coffee creamer was produced according to the method of Example 3, but with unhydrogenated palm kernel stearin instead of hydrogenated coco fat.

The flavor of both non-dairy coffee creamers was judged by a trained taste panel in a 10%-ish solution in hot water (about 70°C). The flavors of the two solutions of non-dairy coffee creamers were compared; here, both the fresh non-dairy coffee creamers and the non-dairy coffee creamers which were stored for 6 months at 40°C were tested. (Translated into shelf life this means (2 * 2* 6 months) 24 months at 20°C. This is because it generally holds that the oxidation rate and therefore also the rate of ageing increases a factor two with every 10°C of temperature increase.)

The taste panel did not observe any negative or other significant flavor differences in the product of Example 4 compared to the product of Example 3.

## Claims

1. A powdery additive for a beverage, soup or other liquid food, which additive comprises a fat phase, **characterized in that** the fat phase comprises unhydrogenated palm kernel stearin.

2. A powdery additive according to claim 1, being a non-dairy creamer or standard coffee creamer; a dairy creamer, including a cappuccino topping; a cappuccino foamer, and in particular a dairy creamer with encapsulated gas; an instant cocoa beverage, or an instant soup.

3. A powdery additive according to claim 1 or 2, wherein unhydrogenated palm kernel stearin is substantially the only fat component.

4. A powdery additive according to any one of the preceding claims, comprising 5-60% fat phase (oil and/or fat); 1-30% proteins; 20-75% carbohydrates; 0-5% emulsifiers; 0-6% stabilizers; 0-1% anti-caking agents and maximally 5% liquid.

5. The use of unhydrogenated palm kernel stearin in a powdery additive for a beverage, soup or other liquid food.

6. Use according to claim 5, wherein the additive is a non-dairy creamer or standard coffee creamer; a dairy creamer, including a cappuccino topping; a cappuccino foamer, and in particular a dairy creamer with encapsulated gas; an instant cocoa beverage, or an instant soup.

7. Use according to claim 5 or 6, wherein unhydrogenated palm kernel stearin is substantially the only fat component in the additive.

8. Use according to any one of claims 5-7, wherein the powdery additive comprises 5-60% fat phase (oil and/or fat); 1-30% proteins; 20-75% carbohydrates; 0-5% emulsifiers; 0-6% stabilizers; 0-1% anti-caking agents and maximally 5% liquid.

## Patentansprüche

1. Pulverförmiges Additiv für ein Getränk, eine Suppe oder eine andere Flüssignahrung, wobei das Additiv eine Fettphase umfasst, **dadurch gekennzeichnet, dass** die Fettphase unhydriertes Palmkernstearin enthält.

2. Pulverförmiges Additiv nach Anspruch 1, welches ein Nicht-MilchWeißer oder ein Standard-Kaffeeweißer; ein Milchweißer, einschließlich Cappuccino-Garnierung; ein Cappuccino-Aufschäumer und insbesondere ein Milchweißer mit eingekapseltem Gas; ein Instant-Kakaogetränk oder eine Instant-Suppe ist.

3. Pulverförmiges Additiv nach Anspruch 1 oder 2, wobei unhydriertes Palmkernstearin im Wesentlichen die einzige Fettkomponente ist..

4. Pulverförmiges Additiv nach einem der vorhergehenden Ansprüche, umfassend 5-60 % Fettphase (Öl und/oder Fett); 1-30 % Proteine; 20-75 % Kohlenhydrate; 0-5 % Emulgatoren; 0-6 % Stabilisatoren; 0-1 % Antiklumpmittel und maximal 5 % Flüssigkeit.

5. Verwendung von unhydriertem Palmkernstearin in einem pulverförmigen Additiv für ein Getränk, eine Suppe oder andere Flüssignahrung.

6. Verwendung nach Anspruch 5, wobei das Additiv ein Nicht-MilchWeißer oder ein Standard-Kaffeeweißer; ein Milchweißer mit einer Cappuccino-Garnierung; ein Cappuccino-Aufschäumer und insbesondere ein Milchweißer mit eingekapseltem Gas; ein Instant-Kakaogetränk oder eine Instant-Suppe ist.

7. Verwendung nach Anspruch 5 oder 6, wobei unhydriertes Palmkernstearin im Wesentlichen die einzige Fettkomponente in dem Additiv ist.

8. Verwendung nach einem der Ansprüche 5-7, wobei das pulverförmige Additiv 5-60 % Fettphase (Öl und/oder Fett); 1-30 % Proteine; 20-75 % Kohlenhydrate; 0-5 % Emulgatoren; 0-6 % Stabilisatoren; 0-1 % Antiklumpmittel und maximal 5 % Flüssigkeit umfasst.

## Revendications

1. Additif en poudre destiné à une boisson, à un potage ou à toute autre nourriture liquide, lequel additif comprend une phase grasse, **caractérisé en ce que** la phase grasse comprend de la stéarine de palmiste non hydrogénée.

2. Additif en poudre selon la revendication 1, qui est un succédané de crème d'origine non laitière ou un succédané de crème pour café standard ; un succédané de crème d'origine laitière, y compris un nappage pour cappuccino ; un produit moussant pour cappuccino, et en particulier un succédané de crème d'origine laitière avec du gaz encapsulé ; une boisson chocolatée instantanée ou un potage instantané.

3. Additif en poudre selon la revendication 1 ou la revendication 2, dans lequel la stéarine de palmiste non hydrogénée est sensiblement le seul composant gras.

4. Additif en poudre selon l'une quelconque des revendications précédentes, comprenant entre 5 % et 60 % de phase grasse (huile et / ou graisse) ; entre 1 % et 30 % de protéines ; entre 20 % et 75 % de glucides ; entre 0 % et 5 % d'agents émulsifiants ; entre 0 % et 6 % d'agents stabilisants ; entre 0 % et 1% d'agents antiagglomérants et 5 % de liquide au maximum.

5. Utilisation de stéarine de palmiste non hydrogénée dans un additif en poudre destiné à une boisson, à un potage ou à toute autre nourriture liquide.

6. Utilisation selon la revendication 5, dans laquelle l'additif est un succédané de crème d'origine non laitière ou un succédané de crème pour café standard ; un succédané de crème d'origine laitière, y compris un nappage pour cappuccino ; un produit moussant pour cappuccino, et en particulier un succédané de crème d'origine laitière avec du gaz encapsulé ; une boisson chocolatée instantanée ou un potage instantané.

7. Utilisation selon la revendication 5 ou la revendication 6, dans lequel la stéarine de palmiste non hydrogénée est sensiblement le seul composant gras dans l'additif.

8. Utilisation selon l'une quelconque des revendications 5 à 7, dans lequel l'additif en poudre comprend entre 5 % et 60 % de phase grasse (huile et / ou graisse) ; entre 1 % et 30 % de protéines ; entre 20 % et 75 % de glucides ; entre 0 % et 5 % d'émulsifiants ; entre 0 % et 6 % d'agents stabilisants ; entre 0 % et 1% d'agents antiagglomérants et 5 % de liquide au maximum.
